# EUROPEAN PATENT SPECIFICATION

(11) **EP 1 972 065 B1**
(45) Date of publication and mention of the grant of the patent: **22.07.2009**
(21) Application number: 06792666.7
(22) Date of filing: 03.08.2006
(51) Int. Cl.: H04B 1/40

(54) **MULTIBAND RADIO MODULE**
MEHRBAND-FUNKMODUL
MODULE RADIO MULTIBANDE

(30) Priority: 12.01.2006 US 766345 P; 28.02.2006 US 307917
(43) Date of publication of application: 24.09.2008
(73) Proprietor: Sony Ericsson Mobile Communications AB, 221 88 Lund (SE)
(72) Inventor: TUDOSOIU, Bogdan, S-224 72 Lund (SE)
(74) Representative: Aurell, Henrik
(86) International application number: PCT/EP2006/064996
(87) International publication number: WO 2007/079987

(56) References cited:
- WO-A-20/05088847
- US-A1- 2002 049 075
- US-A1- 2002 101 907
- US-A1- 2005 245 201

## Description

### Field of the invention

The present invention relates to a radio module configured to accommodate multiple bands in a telecommunication terminal.

### State of the art

Telecommunication terminals such as mobile telephones are often provided with radio interfaces capable of communicating at more than one frequency band, and also capable of using different transmission methods, such as WCDMA and GSM. EDGE (**E**nhanced **D**ata rates for **G**lobal **E**volution) is an enhancement to the GSM and TDMA digital cellular phone systems that provides data transmission up to 384 kbps. In the existing solution for WEDGE that supports high data rates by means of both WCDMA and EDGE only a couple of bands can by used due to the high complexity of switching between different bands, existing PA - power amplifier solutions, space and costs. Document WO 2005/088847 discloses a multimode/multiband mobile station.

### Summary of the invention

The present invention solves implementation of a multiband design supporting all four GSM bands and eight WCDMA bands in by means of RF switches, and a radio module with only one antenna port. The solution is minimal and also gives the possibility of reception RX and transmission TX in both TDMA and CDMA mode (not at the same time) by means of RF switches and a special PA solution (multimode GSM, EDGE; WCDMA in the same PA module) in a phone without space constraints.

The invention is defined in the claims.

Preferably, the input port of the power amplifier module comprises a number of filters and switch means for controlling which band is transmitted from the transceiver.

In one embodiment, the front end module comprises at least two branches with filters for low and high frequencies, respectively.

Preferably, the front end module comprises a number of filters and switch means for controlling which band is transmitted to the transceiver.

In a second aspect the invention provides a telecommunication device, comprising a radio module with:
a power amplifier module with an antenna port connectable to an antenna, and an input port connectable to a transmitter section of a transceiver;
a front end module connectable to the antenna port and a reception section of a transceiver;
wherein said power amplifier module and said front end module are capable of covering a number of frequency bands through said antenna port.

The device may be a portable telephone, a pager, a communicator, a smart phone, or an electronic organiser or a PC card.

### Brief description of the drawing

The invention will be described in detail below with reference to the accompanying drawing of which:

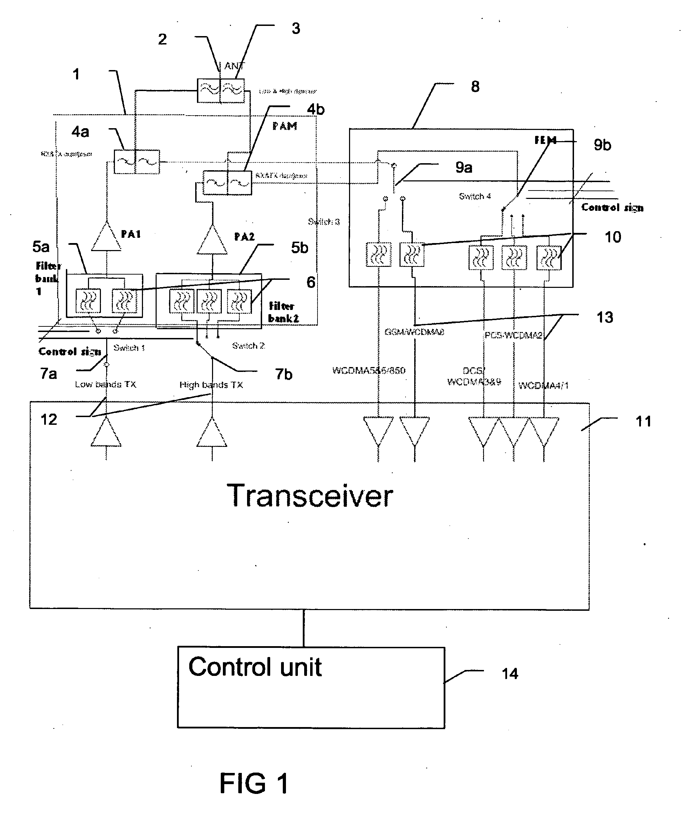

figure 1 is a schematic diagram of a multiband radio module according to an embodiment of the invention.

### Detailed description of preferred embodiments

The invention will be described in connection with a radio module suitable for a telecommunication terminal, such as a portable telephone, a pager, a communicator, a smart phone, or an electronic organiser. The invention may also be incorporated in a "PCMCIA card", i.e. a PC Card used to attach a radio transceiver to a portable computer (standardized by Personal Computer Memory Card International Association, San Jose, CA). This specification will focus on the components relevant to the invention while other components may be conventional.

One embodiment comprises a minimal solution for providing four GSM (both GPRS and EDGE) and eight WCDMA bands.

Here are the bands defined by WCDMA in 25.101 UTRAN FDD:

| Operating Band | UL Frequencies UE transmit, Node B receive | DL frequencies UE receive, Node B transmit |
|---|---|---|
| I | 1920 - 1980 MHz | 2110 -2170 MHz |
| II | 1850 -1910 MHz | 1930 -1990 MHz |
| III | 1710-1785 MHz | 1805-1880 MHz |
| IV | 1710-1755 MHz | 2110-2180* MHz |
| V | 824 - 849 MHz | 869-894 MHz |
| VI | 830-840 MHz | 875-885 MHz |
| VII | 2500-2570 MHz | 2620-2690 MHz |
| VIII | 890-915 MHz | 935-960 MHz |
| IX | 1750-1785 MHz | 1845-1880 MHz |

| | | |
|---|---|---|
| UL = Uplink DL = Downlink UE = User Equipment | | |

In order to cover eight of these bands plus four GSM bands a radio module normally would require a high grade of design, huge costs and a lot of area. A lot of designs used today are using duplexers and power amplifiers, PA:s, for each or only two of these twelve bands. The conventional switches are becoming more and more complex.
The proposed solution will minimize area, decrease costs and give the possibility of using almost all band combinations with the same radio frequency, RF, module.
The solution is based on a power amplifier (both low and high band) that can cover GPRS (General Packet Radio Service) as well as EDGE/WCDMA standards. Preferably, a so called multimode PA is used capable of amplifying signals using GSMK/8PSK/QPSK/16QAM modulations in the same PA in both linear and saturated modes. This kind of power amplifier exists on the market.

It is possible to have these PA:s in a PA module, PAM, as will be discussed below with reference to the figure.
An embodiment of a multiband radio module is shown in figure 1.

The radio module is configured to cooperate with a transceiver 11 that can send and receive signals with EDGE, WCDMA and GSMK modulations. The transceiver should be able to decode GSMK/8PSK/QPSK/16QAM modulations received at each of a number of LNA (Low Noise Amplifier) ports.

The transceiver 11 is connected to a power amplifier module 1, PAM, having an antenna port 2 ANT for connection to an antenna. A diplexer 3 is used for separating low bands (WCDMA 5,6,8 and GSM 900 and 850) from high bands (WCDMA 1,2,3,4,7,9, DCS 1800 and PCS 1900 as well as Bluetooth , WLAN etc) into two branches.

Such a diplexer suitably has an insertion loss about 0.3 dB and really high isolation which will minimize the harmonics and spurious emissions.

After the antenna port 2, the two branches are split in reception, RX, and transmission, TX, for both low and high bands as defined above by two duplexers 4a and 4b. The requirements set for these two duplexers are not high. The low duplexer 4a should cover for TX low bands (824 -915 MHz) and for RX low bands from (869 - 960 MHz) with low insertion loss (estimated max 0.5 dB) and not so high isolation between TX and RX. The same requirements apply to the high band duplexer 4b which should cover for TX high bands (1710-1980) MHz and for RX bands (1805-2180) MHz.

Estimated TX insertion loss will be about 1 dB max for all GSM/EDGE and WCDMA in all TX modes.

The reception branches from the antenna port 2 are connected to a front end module FEM 8 having switches 9a, 9b and filters 10 for each branch that will allow the possibility of switching, for low RX bands branch between: WCDMA 5&6 / GSM 850 and WCDMA 8/GSM 900 and for high RX branch between: WCDMA 3&9/DCS 1800; WCDMA 2/PCS and WCDMA4 and 1 (the WCDMA bands as defined above). Thus, in the embodiment shown, the reception signals on the branches are separated into five frequency groups by the switches 9a, 9b accommodating the twelve frequency/modulation bands.

It is also possible to use higher grade switches for transceivers that have more low noise amplifier, LNA, inputs (such as an LNA input for every frequency/- modulation band combination).

The RX switches 9a, 9b preferably should have low insertion loss (typically 0.5 dB) and low intermodulation distortion IMD - below -100 dBm to meet blocking requirements.

The switch 9a (switch 3) for low RX bands is a single pole, two throughput, SP2T, and for high RX bands the switch 9b (switch 4) is a single pole, three throughput, SP3T which means that three controls signals are required for the two switches 9a, 9b.

The control signals can be switched by the baseband processor. For example if GSM/EDGE (TDMA) or WCDMA TDD - time division duplex are used the system will not transmit and receive at the same time and the switches will be opened and closed prior to reception or transmission by control signals, while in WCDMA mode (CDMA-FDD frequency division duplex) the transmission and reception are done at the same time and the switches will let the preferred RX and TX paths (with respect to each WCDMA band) be open. The described system is able also to deal with both WCDMA compressed mode as well as with uncompressed mode. The compressed mode will allow the mobile telephone to go in GSM mode and read information from other base stations or to search for other WCDMA frequencies for roaming. In uncompressed mode the operation of WCDMA is continuous.

After the RX switches 9a, 9b, the design uses bandpass filters 10 (e.g. surface acoustic wave SAW; bulk acoustic wave BAW or film bulk acoustic resonator FBAR) for getting high attenuation out of band and low ripple in band. The bandpass filters 10 are connected via lines 13 to inputs of the transceiver 1, preferably LNA inputs of the reception section of the transceiver.

The expected insertion loss for low and high bands and LNA input will be max 4 dB.

The transmission TX branches from the transmitter section of the transceiver 11 are output through buffers (not shown) in lines 12 at the input port of the power amplifier module 1 to two switches: one switch 7a for low band (switch 1) and one switch 7b for high band (switch 2).

The transceiver can use broadband TX buffers that cover: one buffer for all low bands TX (WCDMA5,6&8) as defined above + GSM 850/GSM 900 and the other TX buffer for (WCDMA 1,2,3,4,9) and DCS 1800 and PCS 1900.

The switches 7a, 7b will be able to handle both WCDMA (the switch will only be closed for respective band) or they can be switched for TDD (Time Division Duplex) modulations such as: GMSK and 8PSK or WCDMA.

The switches 7a, 7b (1 and 2) are preferably RF switch types (CMOS, PIN diodes, GaAs, etc.) with low insertion loss (expected 0.6 dB max).

The switch 7a (switch 1) for low TX bands is a single pole, two throughput, SP2T, and for high TX bands the switch 7b (switch 2) is a single pole, three throughput, SP3T which means that three controls signals are required for the two switches 7a, 7b. In the embodiment shown, the transmission signals on the lines 12 are separated into five frequency groups by the switches 7a, 7b accommodating the twelve frequency/modulation bands.

After the switches 7a, 7b are two filter banks (one output, more inputs) 5a, 5b with two and three bandpass filters, respectively (e.g. SAW; BAW; or FBAR filters).

The filter bank 5a for low band TX which follows the switch 7a will cover WCDMA5,6/GSM 850 in one bandpass filter and WCDMA8 and GSM 900 in the other one.

The filter bank 5b for high band TX, which follows switch 7b will cover DCS1800/WCDMA3,4 in one bandpass filter, WCDMA2/PCS1900 in another bandpass filter and the last bandpass filter will cover WCDMA1.

Preferably the filter banks 5a, 5b have big attenuation out of band and low ripple over the band. The insertion loss is not a key factor and can be quite high.

After filter banks 5a, 5b are respective power amplifiers PA1 and PA2. The power amplifier PA1 for low TX bands is for (WCDMA5,6&8) as defined above + GSM 850/GSM 900 and the power amplifier PA2 is for high TX bands (WCDMA 1,2,3,4,9) and DCS 1800 /PCS 1900.

Existing power amplifiers on the market can accommodate both EDGE /GMSK and WCDMA standards.

The switches and filter banks together with the power amplifiers can come as a PA module solution that can also include power control.

A control unit 14 (for example a mobile telephone processor) controls the switches 7a, 7b, 9a, 9b by sending control signals. A specific frequency/modulation band may be selected by the user while selecting a desired telecommunication operator, or is set automatically by software in the control unit based on control information received from a network when establishing a connection or during a handover procedure etc.

This solution is not using the switching in the same manner as it is used today and decreases the complexity grade of a twelve band phone solution. Instead of switching at the antenna port as in the prior art, in the present invention modes are switched close to the transceiver enabling reception and transmission of both GSM TDD and WCDMA. This results in that only one antenna port is needed which reduces the complexity of the antenna switch.

In the drawings and specification, there has been disclosed an embodiment of the invention and, although specific terms are employed, they are used in a generic and descriptive sense only and not for purposes of limitation. For example, the number of bands, the specific radio frequencies, and modulation methods may be varied. The invention may be implemented by means of suitable combinations of hardware and software. The scope of the invention is set forth in the following claims.

## Claims

1. A multiband radio module comprising:
a power amplifier module (1) with an antenna port (2) connectable to an antenna, and an input port connectable to a transmitter section of a transceiver, wherein the power amplifier module comprises a first branch for low frequency bands and a second branch for high frequency bands, wherein each branch comprises a duplexer (4a, 4b) arranged to split each branch into a receiver branch and a transmission branch, a power amplifier (pa1, pa2) for the frequency bands of that branch and a filter bank (5a, 5b) connectable to a switch for bands in the respective branch; each branch being connectable to the antenna port via a diplexer (3); a reception front end module (8) connectable to the antenna port and a reception section of a transceiver via the first and second branch of the power amplifier module;
wherein said power amplifier module (1) and said front end module (8) are capable of covering a number of frequency and/or modulation bands through said antenna port.

2. A multiband radio module according to claim 1, wherein the reception front end module further comprise a first branch for low frequency bands connectable to the first branch of the power amplifier module and a second branch for high frequency bands connectable to the second branch of the power amplifier module, and wherein each branch comprises a switch to switch between a number of bands within the low/high frequency bands.

3. A telecommunication device, comprising a radio module according to any of claims 1-2.

4. A telecommunication device according to claim 3, wherein the device is a portable telephone, a pager, a communicator, a smart phone, or an electronic organiser or a PC card.

## Patentansprüche

1. Ein Mehrbandfunkmodul, umfassend:
ein Leistungsverstärkermodul (1) mit einem Antennenanschluss (2), verknüpfbar mit einer Antenne, und einen Eingangskanal, verknüpfbar mit einem Senderbereich eines Sendeemfängers, wobei das Leistungsverstärkermodul einen erste Abzweig für Niederfrequenz-Bänder und einen zweiten Abzweig für Hochfrequenz-Bänder umfasst, wobei jeder Abzweig eine Sende-Empfangsweiche (4a,4b) enthält, so angeordnet, jeden Abzweig in einen Empfangsabschnitt und einen Sendeabschnitt zu unterteilen, einen Endverstärker (PA1,PA2) für die Frequenzbänder jedes Abzweigs und eine Filterbank (5a,5b), verknüpfbar mit einem Schalter für Bänder im jeweiligen Abzweig; jeder Abzweig ist mit dem Antennenanschluss durch eine Frequenzweiche (3) verknüpfbar; ein Empfangeingangsmodul (8), verknüpfbar mit dem Antennenanschluss und einem Empfangsbereich eines Sendeempfängers über den ersten und zweiten Abzweig des Leistungsverstärkermoduls; wobei das genannte Leistungsverstärkermodul (1) und das genannte Eingangsmodul (8) fähig sind, durch den genannten Antennenanschluss eine Anzahl von Frequenz- und/oder Modulationsbändern abzudecken.

2. Ein Mehrbandfunkmodul gemäß Anspruch 1, wobei das Empfangseingangsmodul desweiteren einen ersten Abzweig für Niederfrequenz-Bänder, verknüpfbar mit dem ersten Abzweig des Leistungsverstärkermoduls, und einen zweiten Abzweig für Hochfrequenz-Bänder, verknüpfbar mit dem zweiten Abzweig des Leistungsverstärkermoduls, umfasst, und wobei jeder Abzweig einen Schalter umfasst, um zwischen einer Anzahl von Bändern innerhalb der nieder-/hochfrequenten Bänder umzuschalten.

3. Eine Telekommunikationsanordnung, umfassend ein Funkmodul gemäß eines der Ansprüche 1-2.

4. Eine Telekommunikationsanordnung gemäß Anspruch 3, wobei die Vorrichtung ein tragbares Telefon, ein Funkrufempfänger, ein Fernmelder, ein Smartphone oder ein elektronischer Organisator oder eine PC-Karte ist.

## Revendications

1. Module de radio à band multiple comprenant:
un module d'amplificateur de puissance (1) avec une porte d'antenne (2) branchable à une antenne, et une porte d'entrée branchable à une section de transmetteur d'un émetteur-récepteur, dans lequel le module d'amplificateur de puissance comprend une branche première pour des bands à fréquence basse et une branche deuxième pour des bands à fréquence haute, dans lequel chaque branche comprend un duplexeur (4a, 4b) arrangé à diviser chaque branche dedans une branche récepteur et une branche transmission, un amplificateur de puissance (pa1, pa2) pour les bands de fréquence de cette branche et un banque de filtres (5a, 5b) branchable à un commutateur pour des bands dans la branche respective; chaque branche étant branchable à la porte d'antenne par un diplexeur (3); un module (8) de réception d'extrémité avant branchable à la porte d'antenne et une section de réception de l'émetteur-récepteur par la première et la deuxième branche du module d'amplificateur de puissance; dans lequel le dit module d'amplificateur de puissance (1) et le dit module (8) d'extrémité avant sont capables à couvrir un nombre de bands de fréquence et/ou de modulation par la dite porte d'antenne.

2. Module de radio à band multiple selon la revendication 1, dans lequel le module de réception d'extrémité avant comprends encore une premier branche pour des bands à fréquence basse branchable à la branche premier du module d'amplificateur de puissance et une deuxième branche pour des bands d'haute fréquence branchable à la branche deuxième du module d'amplificateur de puissance, et dans lequel chaque branche comprends un commutateur pour commuter entre un nombre de bands dedans les bands au fréquence basse/haute.

3. Dispositif de télécommunication, comprenant un module de radio selon une quelconque des revendications 1 - 2.

4. Dispositif de télécommunication selon la revendication 3, dans lequel le dispositif est un téléphone portable, un récepteur d'appelle, un smartphone, ou un organiseur électronique ou un PC-Card.
